# EUROPEAN PATENT APPLICATION

(11) **EP 2 475 208 A1**
(43) Date of publication of application: **11.07.2012**
(21) Application number: 10813244.0
(22) Date of filing: 25.03.2010
(51) Int. Cl.: H04W 72/04

(54) **METHOD AND EVOLVED NODEB FOR SEMI-PERSISTENT SCHEDULING REACTIVATION**

(30) Priority: 04.09.2009 CN 200910168987
(71) Applicant: ZTE Corporation, Shenzhen, Guangdong 518057 (CN)
(72) Inventor: ZHANG, Ruixia, Shenzhen Guangdong 518057 (CN); WANG, Bo, Shenzhen Guangdong 518057 (CN)
(74) Representative: Gervasi, Gemma
(86) International application number: PCT/CN2010/071326
(87) International publication number: WO 2011/026322

(57) **Abstract**

The present invention provides a method and an eNB for reactivating semi-persistent scheduling. The method comprises: an eNB (2) where the semi-persistent scheduling is activated storing size information of a pre-allocated transport block after pre-allocating resources to a UE (1); and after receiving a complete semi-persistent scheduling data packet uploaded by the UE (1), the eNB (2) comparing the size of the data packet with the size of the pre-allocated transport block stored in the eNB (2) and reactivating the semi-persistent scheduling according to the comparison result. The eNB (2) comprises a storage module, a resource allocation module, a data packet receiving module and a comparing module. The present invention solves the problem that the eNB can not reactivate the uplink SPS when both SPS services and dynamic scheduling services exist and are divided into UEs in the same LCG and uplink SPS data changes in a period of time, causing allocation of air interface resources to be more reasonable.

## Description

### Technical Field

The present invention relates to wireless communications field, and more specifically, to a method and an evolved NodeB (eNB) for reactivating semi-persistent scheduling (SPS).

### Background of the Related Art

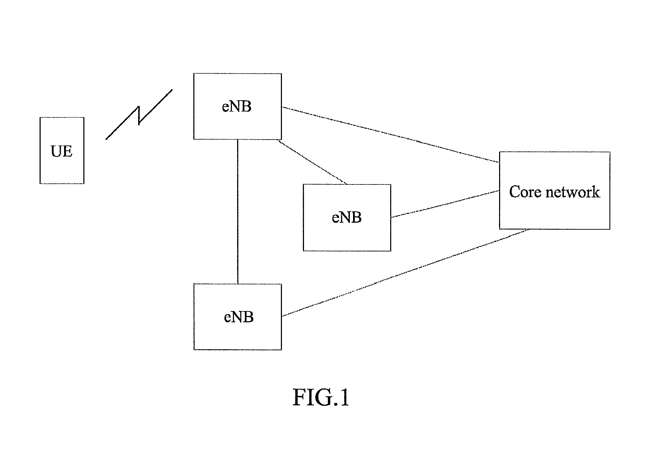

As shown in FIG.1, a Long Term Evolution (LTE) system mainly consists of User Equipments (UEs), evolved NodeBs (eNBs) and a core network. The eNBs are responsible for access layer transactions, such as radio resource management, etc. Uplink and downlink radio resources are scheduled by the eNBs on shared channels. The core network is responsible for non-access layer transactions, such as charging, location management, etc. Generally, each UE can only be connected to one eNB in the network in the uplink direction.

In the existing LTE systems, for uplink and downlink shared channels, uplink and downlink transmissions for different UEs are controlled by scheduling of an eNB, so as to improve channel utilization ratio. Two kinds of scheduling, semi-persistent scheduling (SPS) and dynamic scheduling, can be used by the eNB.

The semi-persistent scheduling refers to a scheduling method which is designed for specific services, and in which resources are required to be activated, reactivated, or released and pre-allocated resources are used at fixed times while resources are dynamically scheduled (e.g., retransmitted) at other times.

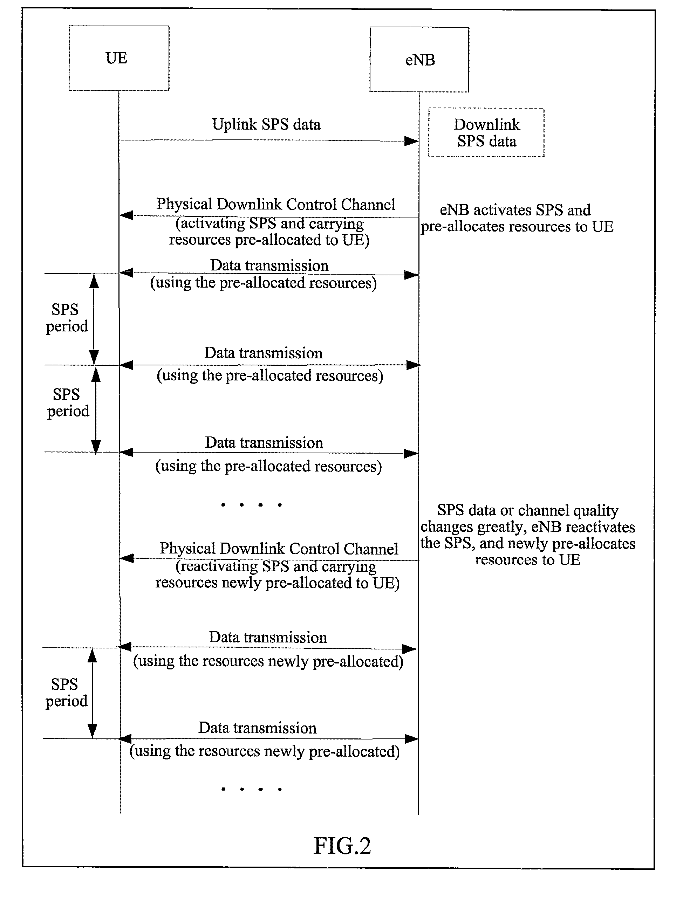

The principle of the semi-persistent scheduling is shown in FIG.2. In the semi-persistent scheduling, SPS data is used to trigger SPS activation. An eNB transmits resource information pre-allocated to a UE over the dedicated Physical Downlink Control Channel (PDCCH) to the UE, to activate the UE. In a semi-persistent scheduling period, the UE will use its static resources pre-allocated by the eNB to transmit data. When there is a greater change in the size of the SPS data or channel quality, the eNB will reactivate the SPS and transmit the resource information newly pre-allocated to the UE over the PDCCH to the UE, and the UE will use the static resources newly pre-allocated by the eNB. to transmit data. The activation and reactivation of uplink SPS and downlink SPS are independent, and SPS reactivation should not be performed fiequently.

When the UE transmits the data using the static resources pre-allocated by the eNB in the semi-persistent scheduling period, if there are other concurrent services, then transmission of the concurrent services should be prohibited in the same Transmission Time Interval (TTI). The UE is required to monitor the PDCCH in the semi-persistent scheduling period, and if control information of the UE is not monitored, then static SPS parameters are used. At this point the control channel of the UE is not used so as to save resources. If reactivation control information of the UE is monitored, then the reactivated SPS parameters are stored and used; if dynamic resource-allocation control information of the UE is monitored, then the control information is analyzed and dynamic data is decoded.

Dynamic scheduling means that an eNB allocates resources dynamically to a UE in each TTI, and informs the UE via the PDCCH; and the UE finds possible dynamic resources by monitoring the PDCCH.

In the uplink direction, the UE is a sender of data; a scheduler is located at the eNB. The UE informs a serving eNB of the total data amount in its uplink buffer by sending a Buffer Status Report (BSR) to the eNB. According to information such as the BSR sent by the UE and the current channel quality, the eNB performs scheduling and allocates resources to each UE.

The UE sends the BSR to the serving eNB by taking a Logical Channel Group (LCG) as a unit. There are 4 LCGs in an LTE system. SPS services can be specially divided into the same LCG, or different LCGs. When the SPS services are divided into different LCGs, the SPS services and dynamic scheduling services may coexist in the same LCG.

The eNB obtains data amount information to be transmitted by the UE according to the received BSR. When the SPS services and dynamic scheduling services are divided into the same LCG, the BSR of this LCG will contain data amount of both the SPS services and dynamic scheduling services, therefore the eNB can not distinguish the data amount of the SPS services from that of the dynamic scheduling services according to the received BSR. So the UE can not inform the eNB of change of the uplink SPS data through the BSR. When the uplink SPS data of the UE changes in a period of time, the eNB can not reactivate the uplink SPS, resulting in continuous waste of air interface resources or insufficiency of air interface resources allocated to the UE.

### Summary of the Invention

The present invention provides a method and an evolved NodeB (eNB) for reactivating semi-persistent scheduling (SPS) so as to solve the problem that the eNB can not reactivate uplink SPS when both SPS services and dynamic scheduling services exist and are divided into UEs in the same Logical Channel Group (LCG).

In order to solve the above problem, the present invention provides a method for reactivating semi-persistent scheduling comprising:
an evolved NodeB (eNB) where the semi-persistent scheduling is activated storing size information of a pre-allocated transport block after pre-allocating resources to a User Equipment (UE); and after receiving a complete semi-persistent scheduling data packet uploaded by the UE, the eNB comparing the size of the data packet with the size of the pre-allocated transport block stored in the eNB and reactivating the semi-persistent scheduling according to the comparison result.

The method may further comprise:
after reactivating the semi-persistent scheduling, the eNB newly pre-allocating resources to the UE and updating the size information of the pre-allocated transport block stored therein to size information of a transport block pre-allocated this time.

The method may also have the following features:
a comparison period is preset in the eNB; and
the step of comparing the size of the data packet with the size of the pre-allocated transport block stored in the eNB and reactivating the semi-persistent scheduling according to the comparison result comprises: the eNB comparing the size of each complete semi-persistent scheduling data packet received from the UE in the comparison period with the size of the pre-allocated transport block stored in the eNB, and reactivating the semi-persistent scheduling when determining that the size of each complete SPS data packet is unequal to the size of the pre-allocated transport block.

The method may also have the following feature:
the value of the comparison period is greater than that of two semi-persistent scheduling periods.

The method may also have the following features:
a threshold is preset in the eNB; and
the step of comparing the size of each complete semi-persistent scheduling data packet with the size of the pre-allocated transport block stored in the eNB comprising: only when the eNB determines that the absolute value of the difference between the size of each complete semi-persistent scheduling data packet received from the UE in the comparison period and the size of the pre-allocated transport block stored in the eNB is greater than or equal to the threshold, the eNB reactivating the semi-persistent scheduling.

The method may also have the following feature:
the size of the complete semi-persistent scheduling data packet is equal to the length of a service data unit of radio link control of the eNB, or equal to the length of a protocol data unit of a packet data convergence protocol of the eNB.

The present invention also provides an eNB for reactivating semi-persistent scheduling comprising a storage module, a resource allocation module, a data packet receiving module and a comparing module; wherein
the resource allocation module is configured to, after pre-allocating resources to a UE, send size information of a pre-allocated transport block to the storage module;
the storage module is configured to store the received size information of the pre-allocated transport block;
the data packet receiving module is configured to, after receiving a complete semi-persistent scheduling data packet uploaded by the UE, send size information of the data packet to the comparing module; and
the comparing module is configured to compare the size of the complete semi-persistent scheduling data packet received with the size of the pre-allocated transport block and send a semi-persistent scheduling reactivation command to the resource allocation module according to the comparison result.

The eNB may also have the following features:
The resource allocation module is further configured to, after receiving the semi-persistent scheduling reactivation command, newly pre-allocate resources to the UE and send size information of a transport block pre-allocated this time; and
the storage module is further configured to update the size information of the pre-allocated transport block stored therein to the received size information of the transport block pre-allocated this time.

The eNB may also have the following features:
a comparison period is preset in the comparing module;
the comparing module is configured to compare the size of the complete semi-persistent scheduling data packet received with the size of the pre-allocated transport block and send the semi-persistent scheduling reactivation command to the resource allocation module according to the comparison result by:
comparing the size of each complete semi-persistent scheduling data packet received from the UE in the comparison period with the size of the pre-allocated transport block stored in the storage module, and sending the semi-persistent scheduling reactivation command to the resource allocation module when determining that the size of each complete SPS data packet is unequal to the size of the pre-allocated transport block.

The eNB may also have the following features:
a threshold is preset in the storage module; and
the comparing module is configured to send the semi-persistent scheduling reactivation command to the resource allocation module only when determining that the absolute value of the difference between the size of each complete semi-persistent scheduling data packet and the size of the pre-allocated transport block stored in the eNB is greater than or equal to the threshold.

The cNB may also have the following feature:
the size of the complete semi-persistent scheduling data packet is equal to the length of a service data unit of radio link control of the eNB, or equal to the length of a protocol data unit of a packet data convergence protocol of the eNB.

Compared with the prior art, the present invention solves the problem that the eNB can not reactivate the uplink SPS when both SPS services and dynamic scheduling services exist and are divided into UEs in the same LCG and uplink SPS data changes in a period of time, causing allocation of air interface resources to be more reasonable.

### Brief Description of Drawings

FIG. 1 is a schematic diagram of an LTE system in prior art;
FIG. 2 is a schematic diagram of the principle of semi-persistent scheduling in prior art;
FIG.3 is a flow chart of a procedure of reactivating SPS as uplink SPS data increases in accordance with one embodiment of the present invention;
FIG.4 is a flow chart of a procedure of reactivating SPS as uplink SPS data decreases in accordance with one embodiment of the present invention; and
FIG.5 is a block diagram of an eNB for reactivating semi-persistent scheduling in accordance with one embodiment of the present invention.

### Preferred Embodiments of the Present Invention

The technical scheme of the present invention will be described in detail below in conjunction with the accompanying figures and embodiments.

The basic conception of a method in accordance with the present invention is that, after pre-allocating resources to a UE, an eNB where semi-persistent scheduling is activated stores size information of a pre-allocated transport block; the eNB receives a complete SPS data packet uploaded by the UE and then compares the size of the data packet with the size of the pre-allocated transport block stored in the eNB and reactivates the semi-persistent scheduling if the two sizes are unequal.

After the semi-persistent scheduling is reactivated, the eNB newly pre-allocates resources to the UE and updates the size information of the pre-allocated transport block stored therein to size information of a transport block pre-allocated this time.

The size of a complete SPS data packet may be equal to the length of a service data unit (SDU) of radio link control (RLC) of the eNB, or equal to the length of a protocol data unit (PDU) of a packet data convergence protocol (PDCP) of the eNB.

Further, in order to avoid frequent trigger of semi-persistent scheduling reactivation caused by larger or smaller single data packet, a comparison period may be preset in the eNB. The eNB receiving the complete SPS data packet uploaded by the UE and then comparing the size of the data packet with the size of the pre-allocated transport block stored in the eNB and reactivating the semi-persistent scheduling if the two sizes are unequal means that the eNB compares the size of each complete semi-persistent scheduling data packet received from the UE in the comparison period with the size of the pre-allocated transport block stored in the eNB, and reactivates semi-persistent scheduling when the size of each complete SPS data packet is unequal to the size of the pre-allocated transport block. The value of the comparison period is greater than that of two semi-persistent scheduling periods.

In order to further restrain frequent trigger of the semi-persistent scheduling reactivation, a threshold may be preset in the eNB. The semi-persistent scheduling is reactivated only when the eNB determines that the absolute value of the difference between the size of each complete semi-persistent scheduling data packet received from the UE in the comparison period and the size of the pre-allocated transport block stored in the eNB is greater than or equal to the threshold. The value of the threshold is associated with service types and specific service features of the semi-persistent scheduling.

Two application examples of the present invention will be further described.

### Example 1: SPS is reactivated as uplink SPS data increases

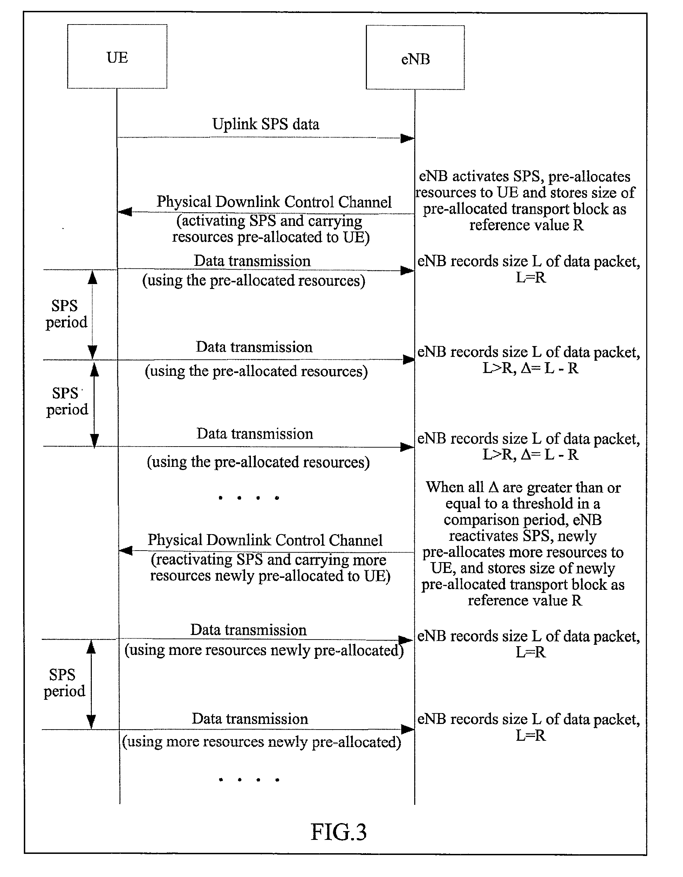

FIG.3 shows a procedure of reactivating SPS when both SPS services and dynamic scheduling services exist and are divided into UEs in the same LCG and the uplink SPS data increases comprising the following steps.

In step 1.1, an eNB activates uplink semi-persistent scheduling, pre-allocates resources to a UE periodically, and stores the size of a pre-allocated transport block as a reference value R.

In step 1.2, the UE transmits the uplink SPS data using the pre-allocated resources in a semi-persistent scheduling period.

In step 1.3, the eNB receives complete uplink SPS data packets, records the length L of RLC SDU or PDCP PDU, where L>R, and a deviation Δ =L - R.

In step 1.4, if the deviations Δ for all the data packets received are greater than or equal to a predetermined threshold in a comparison period, the eNB reactivates the uplink semi-persistent scheduling, newly pre-allocates more resources to the UE, and stores the size of a newly pre-allocated transport block as the reference value R.

In step 1.5, the UE transmits the uplink SPS data using the newly pre-allocated resources in the semi-persistent scheduling period.

### Example 2: SPS is reactivated as uplink SPS data decreases.

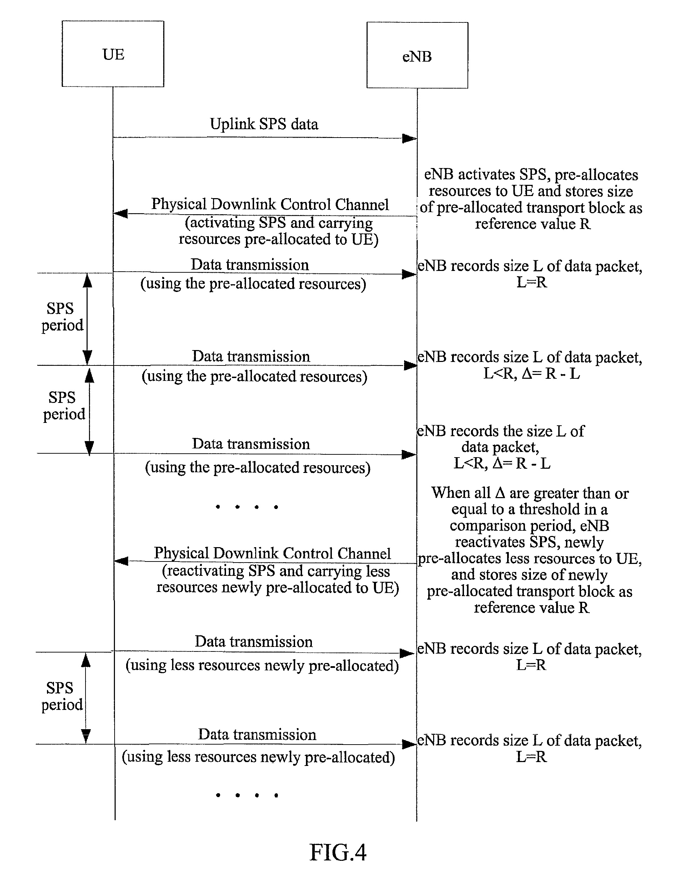

FIG.4 shows a procedure of reactivating SPS when both SPS services and dynamic scheduling services exist and are divided into UEs in the same LCG and the uplink SPS data decreases comprising the following steps.

In step 1.1, an eNB activates uplink semi-persistent scheduling, pre-allocates resources to a UE periodically, and stores the size of a pre-allocated transport block as a reference value R.

In step 1.2, the UE transmits the uplink SPS data using the pre-allocated resources in a semi-persistent scheduling period.

In step 1.3, the eNB receives complete uplink SPS data packets, records the length L of RLC SDU or PDCP PDU, where L<R, and a deviation Δ = R- L.

In step 1.4, if the deviations Δ for all the data packets received are greater than or equal to a predetermined threshold in a comparison period, the eNB reactivates the uplink semi-persistent scheduling, newly pre-allocates less resources to the UE, and stores the size of a newly pre-allocated transport block as the reference value R.

In step 1.5, the UE transmits the uplink SPS data using the newly pre-allocated resources in the semi-persistent scheduling period.

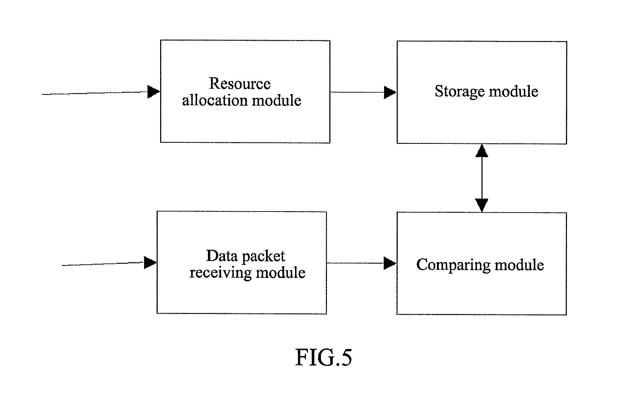

The present invention also provides an eNB for reactivating semi-persistent scheduling, which, as shown in FIG.5, comprises a storage module, a resource allocation module, a data packet receiving module and a comparing module.

The resource allocation module is configured to, after pre-allocating resources to a UE, send size information of a pre-allocated transport block to the storage module; the storage module is configured to store the received size information of the pre-allocated transport block; the data packet receiving module is configured to, after receiving a complete semi-persistent scheduling data packet uploaded by the UE, send size information of the data packet to the comparing module; the comparing module is configured to compare the size of the complete semi-persistent scheduling data packet received with the size of the pre-allocated transport block and send a semi-persistent scheduling reactivation command to the resource allocation module according to the comparison result. The size of the complete semi-persistent scheduling data packet is equal to the length of a service data unit of radio link control of the eNB, or equal to the length of a protocol data unit of a packet data convergence protocol of the eNB.

The resource allocation module is further configured to, after receiving the semi-persistent scheduling reactivation command, newly pre-allocate resources to the UE and send size information of a transport block pre-allocated this time; and the storage module is further configured to update the size information of the pre-allocated transport block stored therein to the received size information of the transport block pre-allocated this time.

In addition, a comparison period is preset in the comparing module.

The comparing module being configured to compare the size of the complete semi-persistent scheduling data packet received with the size of the pre-allocated transport block and send the semi-persistent scheduling reactivation command to the resource allocation module when the two sizes are unequal means that the comparing module compares the size of each complete semi-persistent scheduling data packet received from the UE in the comparison period with the size of the pre-allocated transport block stored in the storage module, and sends the semi-persistent scheduling reactivation command to the resource allocation module when determining that the size of each complete SPS data packet is unequal to the size of the pre-allocated transport block.

A threshold is also preset in the storage module. The comparing module being configured to compare the size of the complete semi-persistent scheduling data packet received with the size of the pre-allocated transport block and send the semi-persistent scheduling reactivation command to the resource allocation module when the two sizes are unequal means that the comparing module compares the size of each complete semi-persistent scheduling data packet received from the UE in the comparison period with the size of the pre-allocated transport block stored in the storage module, and sends the semi-persistent scheduling reactivation command to the resource allocation module when determining that the absolute value of the difference between the size of each complete semi-persistent scheduling data packet received from the UE in the comparison period and the size of the pre-allocated transport block stored in the eNB is greater than or equal to the threshold.

Other various embodiments of the present invention may also be possible. Various modifications and variations to the present invention may be made by those skilled in the art without departing from the spirit and essence of the present invention. However, these corresponding modifications and variations should be covered in the protection scope of the appended claims of the present invention.

### Industrial Applicability

Compared with the prior art, the present invention solves the problem that the eNB can not reactivate the uplink SPS when both SPS services and dynamic scheduling services exist and are divided into UEs in the same LCG and uplink SPS data changes in a period of time, causing allocation of air interface resources to be more reasonable.

## Claims

1. A method for reactivating semi-persistent scheduling comprising:
an evolved NodeB (eNB) where the semi-persistent scheduling is activated storing size information of a pre-allocated transport block after pre-allocating resources to a User Equipment (UE); and
after receiving a complete semi-persistent scheduling data packet uploaded by the UE, the eNB comparing the size of the data packet with the size of the pre-allocated transport block stored in the eNB and reactivating the semi-persistent scheduling according to the comparison result.

2. The method according to claim 1, further comprises:
after reactivating the semi-persistent scheduling, the eNB newly pre-allocating resources to the UE and updating the size information of the pre-allocated transport block stored therein to size information of a transport block pre-allocated this time.

3. The method according to claim 1, wherein
a comparison period is preset in the eNB; and
the step of comparing the size of the data packet with the size of the pre-allocated transport block stored in the eNB and reactivating the semi-persistent scheduling according to the comparison result comprises: the eNB comparing the size of each complete semi-persistent scheduling data packet received from the UE in the comparison period with the size of the pre-allocated transport block stored in the eNB, and reactivating the semi-persistent scheduling when determining that the size of each complete SPS data packet is unequal to the size of the pre-allocated transport block.

4. The method according to claim 3, wherein
the value of the comparison period is greater than that of two semi-persistent scheduling periods.

5. The method according to claim 3, wherein
a threshold is preset in the eNB; and
the step of comparing the size of each complete semi-persistent scheduling data packet with the size of the pre-allocated transport block stored in the eNB comprising: only when the eNB determines that the absolute value of the difference between the size of each complete semi-persistent scheduling data packet received from the UE in the comparison period and the size of the pre-allocated transport block stored in the eNB is greater than or equal to the threshold, the eNB reactivating the semi-persistent scheduling.

6. The method according to any one of claims 1-5, wherein
the size of the complete semi-persistent scheduling data packet is equal to the length of a service data unit of radio link control of the eNB, or equal to the length of a protocol data unit of a packet data convergence protocol of the eNB.

7. An eNB for reactivating semi-persistent scheduling comprising a storage module, a resource allocation module, a data packet receiving module and a comparing module; wherein
the resource allocation module is configured to, after pre-allocating resources to a UE, send size information of a pre-allocated transport block to the storage module;
the storage module is configured to store the received size information of the pre-allocated transport block;
the data packet receiving module is configured to, after receiving a complete semi-persistent scheduling data packet uploaded by the UE, send size information of the data packet to the comparing module; and
the comparing module is configured to compare the size of the complete semi-persistent scheduling data packet received with the size of the pre-allocated transport block and send a semi-persistent scheduling reactivation command to the resource allocation module according to the comparison result.

8. The eNB according to claim 7, wherein
The resource allocation module is further configured to, after receiving the semi-persistent scheduling reactivation command, newly pre-allocate resources to the UE and send size information of a transport block pre-allocated this time; and
the storage module is further configured to update the size information of the pre-allocated transport block stored therein to the received size information of the transport block pre-allocated this time.

9. The eNB according to claim 7, wherein
a comparison period is preset in the comparing module;
the comparing module is configured to compare the size of the complete semi-persistent scheduling data packet received with the size of the pre-allocated transport block and send the semi-persistent scheduling reactivation command to the resource allocation module according to the comparison result by:
comparing the size of each complete semi-persistent scheduling data packet received from the UE in the comparison period with the size of the pre-allocated transport block stored in the storage module, and sending the semi-persistent scheduling reactivation command to the resource allocation module when determining that the size of each complete SPS data packet is unequal to the size of the pre-allocated transport block.

10. The eNB according to claim 9, wherein
a threshold is preset in the storage module; and
the comparing module is configured to send the semi-persistent scheduling reactivation command to the resource allocation module only when determining that the absolute value of the difference between the size of each complete semi-persistent scheduling data packet and the size of the pre-allocated transport block stored in the eNB is greater than or equal to the threshold.

11. The eNB according to any one of claims 7-9, wherein
the size of the complete semi-persistent scheduling data packet is equal to the length of a service data unit of radio link control of the eNB, or equal to the length of a protocol data unit of a packet data convergence protocol of the eNB.
